# EUROPEAN PATENT SPECIFICATION

(11) **EP 4 484 822 B1**
(45) Date of publication and mention of the grant of the patent: **21.01.2026**
(21) Application number: 24183630.3
(22) Date of filing: 21.06.2024
(51) Int. Cl.: F23D 14/02, F23D 14/32, F23D 14/62, F23D 14/70, F23M 9/02

(54) **GAS DISTRIBUTION COMPONENT FOR BURNER**
GASVERTEILUNGSBAUTEIL FÜR BRENNER
COMPOSANT DE DISTRIBUTION DE GAZ POUR BRÛLEUR

(30) Priority: 27.06.2023 CN 202310769771
(43) Date of publication of application: 01.01.2025
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: YAN, Tao, Shanghai, 201108 (CN); GU, Yuquan, Shanghai, 201108 (CN); TSIAVA, Rémi, 78350 Jouy-En-Josas (FR); VAN KAMPEN, Peter, Shanghai, 201108 (CN); PAN, Yuejin, Shanghai, 201108 (CN); ZHANG, Aili, Shanghai, 201108 (CN); CAO, Liang, Shanghai, 201108 (CN)
(74) Representative: Air Liquide

(56) References cited:
- EP-A1- 3 483 521
- EP-A1- 3 974 743
- WO-A2-2012/144766

## Description

### Technical Field

The present invention relates to a gas distribution component for a burner. Specifically, the present application relates to a gas distribution component for distributing a reactant fluid to a burner.

### Background Art

In a metallurgical or glass industrial melting furnace, oxy-fuel combustion has a lower investment cost, higher combustion efficiency, lower NOx emissions and higher product quality than conventional air combustion.

In the prior art, a common staged oxy-fuel burner has at least one fuel channel and at least one oxidant channel. By means of oxygen staging, a portion of oxygen can be diverted, thereby delaying combustion. A nozzle end of the burner produces a substantially flat fuel-rich flame, and a staging nozzle introduces a portion of oxidant from above or below the fuel-rich flame, thus producing a fuel-lean flame.

Chinese invention patent publication no. CN114667412A has disclosed a system for synchronized oxy-fuel boosting of a regenerative glass melting furnace; a first double-staged fuel burner of that system has a primary oxygen valve to apportion a flow of oxygen between primary oxygen and staged oxygen, and a staging mode valve to apportion the flow of staged oxygen between an upper staging port and a lower staging port. The staging oxygen can be directionally controlled and proportioned through either or both of the upper or lower staging ports adjacent to the primary pre-combustor via the staging mode valve. Although such a staging mode valve can provide a number of benefits, it has problems in actual application, specifically, high operation difficulty and high operation costs. In particular, in certain operating conditions in which the staging flow rate does not require frequent regulation, there is no need to configure such a complex regulating valve. EP 3974743 A1discloses a gas distribution component for a burner, comprising an oxidant inlet for introducing an oxidant flow into the burner; an oxidant inlet channel in fluid connection with the oxidant inlet; a fuel inlet; a diffusion/buffering chamber providing a space for diffusion of the oxidant after the oxidant flows out of the oxidant inlet channel and connected to a plurality of oxidant delivery components, wherein multiple through-holes are provided in a wall of the oxidant inlet channel that is adjacent to the diffusion/buffering chamber.

Based on the above discussion, there is a need in the market for a more stable gas distribution component which can be operated more easily, to overcome the abovementioned shortcomings.

### Summary of the Invention

The present invention hopes to solve the technical problems in the prior art mentioned above, by providing a gas distribution component which is easy to operate and adjust and has a low manufacturing cost, mainly for the purpose of introducing oxidant into a multi-stage burner.

To achieve the above objective, in a first aspect of the present invention, a gas distribution component for a burner according to claim 1 is provided.

Further, the ratio of (a) a total effective flow cross section for the oxidant from the diffusion/buffering chamber to the oxidant delivery components to (b) a total volume of the diffusion/buffering chamber is set as a buffering ratio coefficient, which is in the range of 5% - 50% m²/m³, preferably 10% - 40% m²/m³, more preferably 15% - 35% m²/m³, and more preferably 20% - 30% m²/m³. The objective of setting this coefficient is to control the flow speed of oxidant, and achieve a buffering effect, to adapt to low gas intake pressure conditions.

Further, a baffle may be provided at a junction of the diffusion/buffering chamber and each oxidant delivery component, the baffle partially blocking an inlet of the oxidant delivery component. These baffles can limit the flow rate of oxidant conveyed to each oxidant delivery component, so as to adjust the oxidant distribution ratio.

Further, the diameters of the multiple through-holes are distributed non-uniformly.

Further, the multiple through-holes are configured such that middle through-holes are of smaller diameter while peripheral through-holes are of larger diameter. The middle through-holes are through-holes at a shorter distance from the oxidant inlet.

The present invention also relates to a burner comprising such a gas distribution component.

Further, the gas distribution component/burner is provided with a fuel inlet, and the oxidant inlet is not in communication with the fuel inlet. That is to say, no structure for mixing fuel and oxidant isprovided and the corresponding burner is what is known in the art as a non-premix burner.

Further, the oxidant delivery components may comprise a primary oxidant fuel delivery component, a secondary oxidant delivery component and a tertiary oxidant delivery component;
the secondary oxidant delivery component and the tertiary oxidant delivery component are arranged on the same side of the primary oxidant fuel delivery component, and the secondary oxidant delivery component is located between the tertiary oxidant delivery component and the primary oxidant fuel delivery component. The corresponding burner is therefore a multi-stage burner.

Further, the primary oxidant fuel delivery component may comprise:
at least one fuel supply channel for fuel to flow through, one end of the at least one fuel supply channel being provided with a fuel nozzle; and
at least one primary oxidant supply channel for primary oxidant to flow through, the primary oxidant supply channel being constructed to surround an outer wall of the fuel supply channel, and one end of the primary oxidant supply channel being provided with an annular nozzle surrounding the fuel nozzle.

The secondary oxidant delivery component comprising at least one secondary oxidant supply channel for secondary oxidant to flow through, one end of the at least one secondary oxidant supply channel being provided with a secondary oxidant nozzle.

The tertiary oxidant delivery component comprising at least one tertiary oxidant supply channel for tertiary oxidant to flow through, one end of the at least one tertiary oxidant supply channel being provided with a tertiary oxidant nozzle.

The invention also relates to the use of the multi-stage burner according to Claim 10 for the combustion of the fuel with the oxidant, in particular in a melting operation in a furnace. During such use, the total oxidant is advantageously divided in the primary oxidant and the secondary and/or tertiary oxidant so that the primary oxidant accounting for more than 0% and less than 20%, preferably less than 10%, more preferably 2% - 5% of the total oxidant.

According to a preferred embodiment, the oxidant is oxygen.

The gas distribution component provided in the present invention has the following advantages:
1. The gas distribution component is easy to operate, with no need to configure a complex valve structure, so operation and manufacturing costs are greatly reduced.
2. The configuration of the oxidant inlet channel and the diffusion/buffering chamber enhances thorough diffusion of oxidant before it flows into the oxidant delivery components, effectively reducing the flow speed of oxidant, and thus markedly reducing the pressure loss of oxidant at this stage. In existing pure oxygen burners commonly seen at present, the pressure loss of oxidant in this process step is about 5 KPa - 20 KPa, whereas the pressure loss in this process step is lower than 1 KPa in the present application. Thus, the pressure requirement for an upstream oxygen source can be greatly reduced; for example, in the case of a VSA apparatus for on-site oxygen production, the load of the pressurizing pump can be reduced, or there is no need to provide a pressurizing pump.
3. The diameters of the multiple through-holes are configured to be distributed non-uniformly; the flow speed is faster at through-holes those are at a shorter distance from the oxidant inlet (i.e. middle through-holes), so the oxidant flow speeds at different positions on the plane can be allocated better; a stable oxidant flow speed is favourable for downstream flame stability.
4. The gas distribution component has a larger range of oxidant distribution adjustment; the distribution of oxidant between the oxidant supply channels of the different stages can be adjusted over a large range (for example, the range of adjustment of the secondary oxidant distribution ratio can reach 1% - 80% of the total oxidant). This property enables adaptation to changes in fuel of different types (e.g. switching from natural gas to hydrogen, biomass gas, or a mixed fuel of natural gas and hydrogen, etc.), and changes in oxidant properties or varieties (e.g. changes in oxygen temperature, from room temperature to preheated to about 500 degrees Celsius; or changes in the oxygen purity of oxygen). The required combustion effect can still be achieved when the abovementioned major changes in conditions take place.

### Brief description of the drawings

The advantages of the present invention can be further understood from the following detailed description of the present application and the accompanying drawings.
Fig. 1 shows a 3D schematic perspective rear-view drawing of a gas distribution component for a burner.
Fig. 2 shows a schematic perspective drawing of an oxidant inlet and an oxidant inlet channel.
Fig. 3 shows a schematic perspective front-viewdrawing of a gas distribution component and inlets of oxidant delivery components.
Fig. 4 shows a schematic perspective rear-view drawing of a diffusion/buffering chamber without its removable outside wall.
Fig. 5a shows a schematic top-view drawing of the diffusion/buffering chamber.
Fig. 5b shows a schematic drawing of the diffusion/buffering chamber with baffles at the junctions of the diffusion/buffering chamber and the oxidant delivery components, wherein Fig. 5b is a sectional view of Fig. 5a in direction C-C.

Key to the drawings: oxidant inlet channel - 101, oxidant inlet - 102, outside wall of diffusion/buffering chamber - 103, fuel inlet channel - 104, fuel inlet - 105, oxidant supply conduit - 106, flow-guiding partition - 201, bolt - 301, primary oxidant fuel delivery component - 302, secondary oxidant delivery component - 303, tertiary oxidant delivery component - 304, through-holes - 305, diffusion/buffering chamber - 401, baffle - 501.

### Detailed Description of the Invention

The technical solution of the present invention is described clearly and completely below with reference to the drawings. Obviously, the embodiments described are some, not all, of the embodiments of the present invention. Based on the embodiments of the present invention, all other embodiments obtained by those skilled in the art without inventive effort shall fall within the scope of protection of the present invention.

In the description of the present invention, it must be explained that orientational or positional relationships indicated by terms such as "upper", "lower", "left", "right", "vertical", "horizontal", "inner" and "outer" are based on the orientational or positional relationships shown in the drawings, and are merely simplified descriptions intended to facilitate description of the present invention, without indicating or implying that the device or element referred to must have a specific orientation or be constructed and operated in a specific orientation, and therefore must not be construed as limiting the present invention. In addition, the terms "first", "second" and "third" merely serve a descriptive purpose, and must not be construed as indicating or implying relative importance.

In the description of the present invention, it must be explained that unless otherwise clearly stated and defined, the terms "mounted", "connected together" and "connected" should be interpreted in a broad sense; for example, they could mean fixedly connected, but could also mean removably connected or integrally connected; they could mean mechanically connected; they could mean directly connected together, but could also mean connected together indirectly via an intermediate medium; and they could mean internal communication between two elements. Those skilled in the art may interpret the specific meaning of the above terms in the present invention according to the specific circumstances.

Unless clearly indicated otherwise, each aspect or embodiment defined herein may be combined with any other aspect or embodiment. In particular, any preferred or advantageous feature indicated may be combined with any other preferred or advantageous feature indicated.

As used herein, the expression "around" or "surrounding" essentially means that an annular shape is formed, substantially meaning that an inner ring is enclosed within an outer ring, so that a certain gap is present between an inner layer and an outer layer. This gap may be an annular gap or a non-annular gap. As used herein, this may mean that a primary oxidant supply channel surrounds a portion (e.g. more than half) of the circumference of a fuel supply channel, or that the primary oxidant supply channel surrounds the entire circumference of the fuel supply channel. The latter case may be interpreted as meaning that the primary oxidant supply channel is arranged to completely surround the circumference of the fuel supply channel in the circumferential direction. The design of a fuel nozzle and an annular nozzle may be understood in a similar way.

As used herein, the expression "staging" means causing fuel and oxidant to mix at different times and different positions, making it possible to achieve low nitrogen oxide emissions and control of a gas atmosphere near a molten material surface. The meaning of staging is that oxidant can be supplied at a different ratio or flow speed via another nozzle spaced apart from the fuel nozzle. For example, when the staging of secondary oxidant and tertiary oxidant is 95%, this means that the remaining 5% of the oxidant is supplied with fuel to a primary oxidant fuel delivery component.

As used herein, the expression "fuel" means gaseous, liquid or solid fuels that can be used in place of one another or used in combination. The gaseous fuel may be natural gas (mainly methane), propane, hydrogen or any other hydrocarbon compound and/or sulfur-containing compound. The solid or liquid fuel may mainly be any compound in a carbon-containing and/or hydrocarbon and/or sulfur-containing form. The solid fuel can be selected from petroleum coke, coal powder, biomass particles or another fossil fuel, and the solid fuel generally requires a carrier gas (such as air or carbon dioxide) to form a delivery wind for delivery. The liquid fuel can be selected from liquid hydrocarbons or coal tar. Those skilled in the art can decide the way in which the gaseous, liquid or solid fuel is introduced, as required. It is not the intention of the present invention to impose any limitations in this regard. Some of the data presented herein uses natural gas as fuel, but the results are considered to be suitable for other fuels, e.g. hydrogen and other gaseous fuels.

As used herein, the expression "oxidant" may be composed of an oxidant such as air or oxygen-rich air. The oxidant is preferably composed of an oxidant with a molar oxygen concentration of at least 50%, preferably at least 80%, more preferably at least 90% and most preferably at least 95%. These oxidants include oxygen-rich air containing at least 50% oxygen by volume, such as 99.5% pure oxygen produced by a cryogenic air separation plant, or non-pure oxygen (88% or more by volume) produced by a vacuum pressure swing adsorption process, or oxygen produced by any other source.

The use of oxygen-containing fuel herein can eliminate nitrogen in a melting operation, and reduce NOx and particulate emissions to below a standard. The use of an oxy-fuel burner can achieve different flame momenta, melt coverage rates and flame radiation characteristics. In the furnace, the main sources of nitrogen are air leakage, low-purity oxygen supplied from a vacuum pressure swing adsorption or pressure swing adsorption apparatus, nitrogen in the fuel (e.g. natural gas), or nitrogen contained in the melting raw material packed in the heating furnace.

As used herein, the fuel supply channel, primary oxidant supply channel, secondary oxidant supply channel and tertiary oxidant supply channel may be substantially annular channels, and may have inlet and outlet regions. When viewed from a cross section of a plane perpendicular to an axial flow direction, each of the substantially annular channels is preferably annular, but this shape can also be non-annular.

Chinese invention patent application no. CN202080084376.9 has disclosed a burner for fuel combustion and a combustion method thereof.

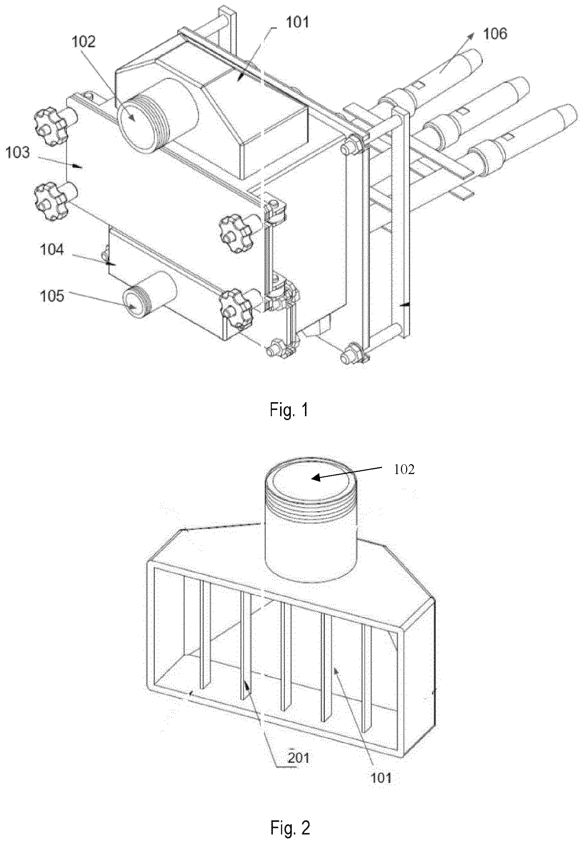

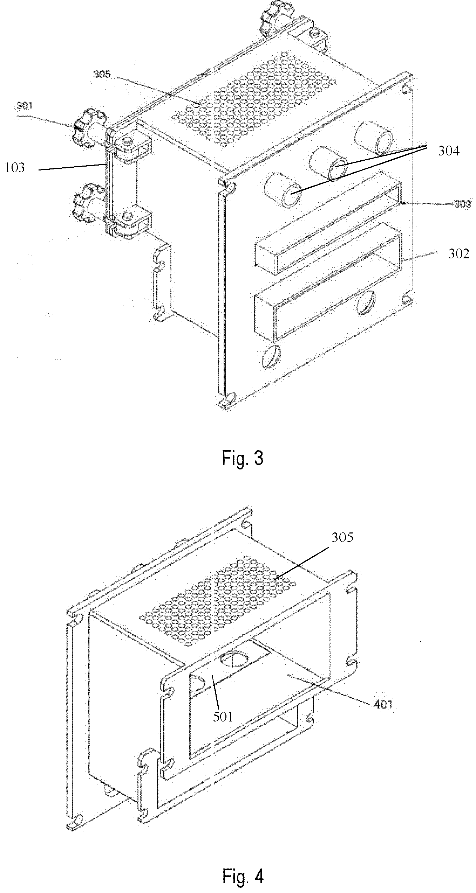

Fig. 1 shows a 3D schematic drawing of a gas distribution component for a burner. Oxidant enters an oxidant inlet channel 101 via an oxidant inlet 102. As shown in Figs. 1 and 4, through-holes 305 are provided on a wall of the oxidant inlet channel 101 that is adjacent to a diffusion/buffering chamber; oxidant is dispersed to the diffusion/buffering chamber 401 through these through-holes 305. An outside wall 103 of the diffusion/buffering chamber 401 is detachably connected to the diffusion/buffering chamber. As an example, bolts 301 may be used for the connection. The detachable connection enables an operator to clean the components of the burner quickly, thus overcoming the problem in the prior art that the components of the entire burner need to be dismantled in order to clear blockages caused by dust, etc.

Oxidant flowing out of the diffusion/buffering chamber is guided to each oxidant delivery component. In some exemplary descriptions, the through-holes may be distributed uniformly. In some exemplary descriptions, the through-holes may be distributed such that through-holes in the middle are of small diameter while through-holes at the periphery are of large diameter. Such a distribution can increase the effective area for oxidant to flow through via the peripheral through-holes, such that the oxidant flowing out of the diffusion/buffering chamber per unit area of the entire oxidant circulation cross section is more uniform, thus ensuring that the distribution of oxidant at the oxidant delivery components is more uniform, and the flame is more stable.

Although an independent buffering tank may also be set up in a burner in the prior art, it is often quite remote from the burner located downstream of the buffering tank, so the buffering/smoothing effect of the buffering tank is weakened. Moreover, due to the need to connect multiple burners downstream of the buffering tank, the buffering effect on each buffering tank is different, being affected by the positions of the burners and the pipeline layout. The configuration of the diffusion/buffering chamber described above can ensure a buffering effect on the oxidant flow.

As an example, as shown in Fig. 2, multiple flow-guiding partitions 201 are arranged in the oxidant inlet channel 101. The flow-guiding partitions 201 are oriented to be substantially parallel to the direction of a central axis of the oxidant inlet. The flow-guiding partitions 201 can guide and direct the oxidant in the oxidant inlet channel.

As shown in Fig. 3, the oxidant delivery components comprise a primary oxidant fuel delivery component 302, a secondary oxidant delivery component 303 and a tertiary oxidant delivery component 304. The secondary oxidant delivery component and the tertiary oxidant delivery component are arranged on the same side of the primary oxidant fuel delivery component, and the secondary oxidant delivery component is located between the tertiary oxidant delivery component and the primary oxidant fuel delivery component. Correspondingly, the oxidant inlet is equivalent to a main inlet, delivering oxidant separately to the primary oxidant fuel delivery component 302, the secondary oxidant delivery component 303 and the tertiary oxidant delivery component 304.

Fuel is delivered to a fuel inlet channel 104 via a fuel inlet 105, and the fuel inlet channel then conveys the fuel flow to a fuel supply channel. A primary oxidant supply channel for a primary oxidant flow may surround an outer wall of the fuel supply channel, and is coaxial with the fuel supply channel.

The fuel supply channel may be a fuel conduit formed of a suitable material (e.g. high-temperature-resistant metal or ceramic). A starting end of the fuel conduit is removably connected to the entire gas distribution component, but could also be formed integrally therewith. An outlet end of the fuel conduit is connected to a fuel nozzle. The oxidant supply channel may be an oxidant supply conduit formed of a specific material (e.g. high-temperature-resistant metal or ceramic), but could also be a shape-fitted chamber or channel formed in a burner block. As an example, the secondary oxidant delivery component 303 comprises 3 oxidant supply conduits 106.

The total oxidant can be split into three streams: a primary oxidant stream, a secondary oxidant stream and a tertiary oxidant stream. The primary oxidant stream surrounds the fuel nozzle, and the volume flow rate thereof accounts for only a very small proportion of the total oxidant, preferably less than 20% or less than 10% or less than 5% or about 2% - 5%. The remaining oxidant is used as the secondary oxidant stream and the tertiary oxidant stream. This will be respectively equivalent to a preferred staging proportion of at least 10% or at least 20% or at least 40% or at least 50% or at least 60% or even at least 70%. This means that a sufficient amount of oxidant flows through the secondary oxidant supply channel or tertiary oxidant supply channel, or is distributed between the two supply channels for the purpose of staging. This not only reduces the production of NOx, but also significantly increases the capacity for controlling the gas atmosphere near the melting surface of the material being heated. In order to be able to control the atmosphere close to the melting surface, so as to perform oxidation or reduction selectively according to the processing situation, it is desired that operations of the burner can be switched conveniently. For this purpose, the oxidant flow rates in the primary oxidant supply channel, secondary oxidant supply channel and tertiary oxidant supply channel can be independently controlled by means of an oxidant staging control mechanism.

It should be pointed out that it is not ideal for the primary oxidant stream to be zero; this will give rise to a void or vacuum in the primary oxidant supply channel, causing hot corrosive furnace gases to be sucked in, which will destroy the burner very quickly and cause flame instability. In addition, if the primary oxidant stream is very small, the flame stability will also drop; and the state of mixing of gaseous fuel with oxidant will deteriorate, making it difficult to achieve a flame of practical use. In certain situations, the secondary oxidant stream or tertiary oxidant stream may be close to zero; in this case, the burner is essentially approaching or equivalent to a two-stage burner, and the corresponding combustion effect and characteristics can be predicted and adjusted according to the knowledge of those skilled in the art.

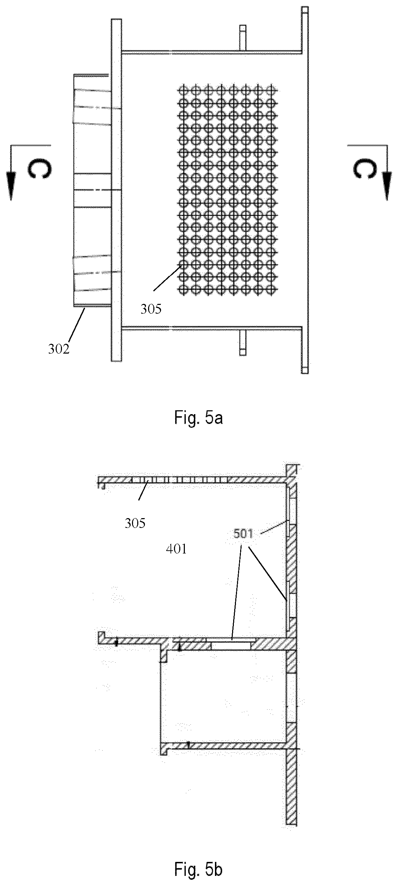

The technical solution of the present invention omits complex designs such as valves, for convenience of operation, processing and manufacturing, but nevertheless provides a simple adjustment mechanism for adjusting the rate of flow into each oxidant delivery component. As shown in Figs. 5a and 5b, sectional view in direction C-C shows that a baffle 501 may be provided at the junction of the diffusion/buffering chamber and each oxidant delivery component. The baffles can block the inlets of the oxidant delivery components as needed, thereby limiting the flow rate of oxidant conveyed to each oxidant delivery component.

The prior art includes a variety of more precise methods of adjusting the staging proportion of the oxidant flow, e.g. by providing an oxygen staging valve, etc. However, valves have higher operation and manufacturing costs, and also take up more space in the oxidant inlet channel, so on the contrary are unsuitable for use in scenarios demanding faster and more convenient staging control.

## Claims

1. Gas distribution component for a burner, comprising:
an oxidant inlet (102), for introducing an oxidant flow into the burner;
an oxidant inlet channel (101), in fluid connection with the oxidant inlet (102);
a fuel inlet (105) for delivering fuel to a fuel inlet channel (104), whereby the oxidant inlet (102) is not in communication with the fuel inlet (105);
a diffusion/buffering chamber (401), providing a space for diffusion of the oxidant after the oxidant flows out of the oxidant inlet channel (101), the diffusion/buffering chamber (401) being connected to oxidant delivery components (302, 303, 304);
wherein multiple through-holes (305) are provided in a wall of the oxidant inlet channel (101) that is adjacent to the diffusion/buffering chamber (401);
wherein the oxidant delivery components (302, 303, 304) comprise a primary oxidant fuel delivery component (302), a secondary oxidant delivery component (303) and a tertiary oxidant delivery component (304);
the secondary oxidant delivery component (303) and the tertiary oxidant delivery component (304) are arranged on the same side of the primary oxidant fuel delivery component (302), and the secondary oxidant delivery component (303) is located between the tertiary oxidant delivery component (304) and the primary oxidant fuel delivery component (302).

2. Gas distribution component according to Claim 1, wherein the ratio of (a) a total effective flow cross section for the oxidant from the diffusion/buffering chamber (401) to the oxidant delivery components (302, 303, 304) to (b) a total volume of the diffusion/buffering chamber (401) is set as a buffering ratio coefficient, which is in the range of 10% - 40% m²/m³.

3. Gas distribution component according to Claim 2, wherein the buffering ratio coefficient is in the range of 15% - 35% m²/m³, preferably in the range of 20% - 30% m²/m³.

4. Gas distribution component according to any one of the preceding Claims, wherein a baffle (501) is provided at a junction of the diffusion/buffering chamber (401) and each oxidant delivery component (302, 303, 304), the baffle (501) partially blocking an oxidant inlet into the oxidant delivery component (302, 303, 304).

5. Gas distribution component according to any one of the preceding Claims, wherein the diameters of the multiple through-holes (305) are distributed non-uniformly.

6. Gas distribution component according to Claim 5, wherein the multiple through-holes (305) are configured such that middle through-holes (305) are of smaller diameter while peripheral through-holes (305) are of larger diameter.

7. Gas distribution component according to any one of the preceding Claims, wherein the diffusion/buffering chamber (401) has a detachably connected outside wall (103).

8. Multi-stage burner comprising a gas distribution component according to any one of the preceding Claims.

9. Multi-stage burner according to Claim 8, wherein the primary oxidant fuel delivery component (302) is provided with:
at least one fuel supply channel for fuel to flow through from the fuel inlet channel (104), one end of the at least one fuel supply channel being provided with a fuel nozzle; and
at least one primary oxidant supply channel for primary oxidant to flow through,
the primary oxidant supply channel being constructed to surround an outer wall of the fuel supply channel, and one end of the primary oxidant supply channel being provided with an annular nozzle surrounding the fuel nozzle;
the secondary oxidant delivery component (303) being provided with at least one secondary oxidant supply channel for secondary oxidant to flow through, one end of the at least one secondary oxidant supply channel being provided with a secondary oxidant nozzle;
the tertiary oxidant delivery component (304) being provided with at least one tertiary oxidant supply channel for tertiary oxidant to flow through, one end of the at least one tertiary oxidant supply channel being provided with a tertiary oxidant nozzle.

10. Use of the multi-stage burner according to Claim 8 or 9 for the combustion of the fuel with the oxidant.

11. Use according to Claim 10, wherein the total oxidant is divided in the primary oxidant and the secondary and/or tertiary oxidant, the primary oxidant accounting for more than 0% and less than 20%, preferably less than 10%, more preferably 2% - 5% of the total oxidant.

12. Use according to Claim 10 or 11, wherein the oxidant is oxygen.

13. Use according to any one of claims 10 to 12 in a melting operation in a furnace.

## Patentansprüche

1. Gasverteilungskomponente für einen Brenner, umfassend: einen Oxidationsmitteleinlass (102) zum Einleiten eines Oxidationsmittelstroms in den Brenner; einen Oxidationsmitteleinlasskanal (101), in Fluidverbindung mit dem Oxidationsmitteleinlass (102); einen Brennstoffeinlass (105) zum Zuführen von Brennstoff zu einem Brennstoffeinlasskanal (104), wobei der Oxidationsmitteleinlass (102) nicht in Verbindung mit dem Brennstoffeinlass (105) steht; eine Diffusions-/Pufferkammer (401), die einen Raum für die Diffusion des Oxidationsmittels bereitstellt, nachdem das Oxidationsmittel aus dem Oxidationsmitteleinlasskanal (101) ausströmt, wobei die Diffusions-/Pufferkammer (401) mit Oxidationsmittelzufuhrkomponenten (302, 303, 304) verbunden ist; wobei mehrere Durchgangslöcher (305) in einer Wand des Oxidationsmitteleinlasskanals (101) vorgesehen sind, die an die Diffusions-/Pufferkammer (401) angrenzt; wobei die Oxidationsmittelzufuhrkomponenten (302, 303, 304) eine primäre Oxidationsmittel-Brennstoff-Zufuhrkomponente (302), eine sekundäre Oxidationsmittelzufuhrkomponente (303) und eine tertiäre Oxidationsmittelzufuhrkomponente (304) umfassen; die sekundäre Oxidationsmittelzufuhrkomponente (303) und die tertiäre Oxidationsmittelzufuhrkomponente (304) auf derselben Seite der primären Oxidationsmittel-Brennstoff-Zufuhrkomponente (302) angeordnet sind, und die sekundäre Oxidationsmittelzufuhrkomponente (303) sich zwischen der tertiären Oxidationsmittelzufuhrkomponente (304) und der primären Oxidationsmittel-Brennstoff-Zufuhrkomponente (302) befindet.

2. Gasverteilungskomponente nach Anspruch 1, wobei das Verhältnis von (a) einer gesamten effektiven Strömungsquerschnittsfläche für das Oxidationsmittel von der Diffusions-/Pufferkammer (401) zu den Oxidationsmittelzufuhrkomponenten (302, 303, 304) zu (b) einem Gesamtvolumen der Diffusions-/Pufferkammer (401) als Pufferverhältniskoeffizient festgelegt ist, der im Bereich von 10 % - 40 % m²/m³ liegt.

3. Gasverteilungskomponente nach Anspruch 2, wobei der Pufferverhältniskoeffizient im Bereich von 15 % - 35 % m²/m³, vorzugsweise im Bereich von 20 % - 30 % m²/m³ liegt.

4. Gasverteilungskomponente nach einem der vorhergehenden Ansprüche, wobei eine Prallplatte (501) an einer Verbindungsstelle der Diffusions-/Pufferkammer (401) und jeder Oxidationsmittelzufuhrkomponente (302, 303, 304) vorgesehen ist, wobei die Prallplatte (501) einen Oxidationsmitteleinlass in die Oxidationsmittelzufuhrkomponente (302, 303, 304) teilweise blockiert.

5. Gasverteilungskomponente nach einem der vorhergehenden Ansprüche, wobei die Durchmesser der mehreren Durchgangslöcher (305) ungleichmäßig verteilt sind.

6. Gasverteilungskomponente nach Anspruch 5, wobei die mehreren Durchgangslöcher (305) so konfiguriert sind, dass mittlere Durchgangslöcher (305) einen kleineren Durchmesser haben, während periphere Durchgangslöcher (305) einen größeren Durchmesser haben.

7. Gasverteilungskomponente nach einem der vorhergehenden Ansprüche, wobei die Diffusions-/Pufferkammer (401) eine lösbar verbundene Außenwand (103) aufweist.

8. Mehrstufigenbrenner, umfassend eine Gasverteilungskomponente nach einem der vorhergehenden Ansprüche.

9. Mehrstufigenbrenner nach Anspruch 8, wobei die primäre Oxidationsmittel-Brennstoff-Zufuhrkomponente (302) versehen ist mit: mindestens einem Brennstoffzufuhrkanal, durch den Brennstoff aus dem Brennstoffeinlasskanal (104) strömen kann, wobei ein Ende des mindestens einen Brennstoffzufuhrkanals mit einer Brennstoffdüse versehen ist; und mindestens einem primären Oxidationsmittelzufuhrkanal, durch den primäres Oxidationsmittel strömen kann, wobei der primäre Oxidationsmittelzufuhrkanal so konstruiert ist, dass er eine Außenwand des Brennstoffzufuhrkanals umgibt, und ein Ende des primären Oxidationsmittelzufuhrkanals mit einer ringförmigen Düse versehen ist, die die Brennstoffdüse umgibt; die sekundäre Oxidationsmittelzufuhrkomponente (303) mit mindestens einem sekundären Oxidationsmittelzufuhrkanal versehen ist, durch den sekundäres Oxidationsmittel strömen kann, wobei ein Ende des mindestens einen sekundären Oxidationsmittelzufuhrkanals mit einer sekundären Oxidationsmitteldüse versehen ist; die tertiäre Oxidationsmittelzufuhrkomponente (304) mit mindestens einem tertiären Oxidationsmittelzufuhrkanal versehen ist, durch den tertiäres Oxidationsmittel strömen kann, wobei ein Ende des mindestens einen tertiären Oxidationsmittelzufuhrkanals mit einer tertiären Oxidationsmitteldüse versehen ist.

10. Verwendung des Mehrstufigenbrenners nach Anspruch 8 oder 9 zur Verbrennung des Brennstoffs mit dem Oxidationsmittel.

11. Verwendung nach Anspruch 10, wobei das gesamte Oxidationsmittel in das primäre Oxidationsmittel und das sekundäre und/oder tertiäre Oxidationsmittel aufgeteilt wird, wobei das primäre Oxidationsmittel mehr als 0 % und weniger als 20 %, vorzugsweise weniger als 10 %, noch bevorzugter 2 % - 5 % des gesamten Oxidationsmittels ausmacht.

12. Verwendung nach Anspruch 10 oder 11, wobei das Oxidationsmittel Sauerstoff ist.

13. Verwendung nach einem der Ansprüche 10 bis 12 in einem Schmelzvorgang in einem Ofen.

## Revendications

1. Composant de distribution de gaz pour un brûleur, comprenant : une entrée d'oxydant (102), pour introduire un flux d'oxydant dans le brûleur ; un canal d'entrée d'oxydant (101), en communication fluidique avec l'entrée d'oxydant (102) ; une entrée de combustible (105) pour acheminer du combustible vers un canal d'entrée de combustible (104), moyennant quoi l'entrée d'oxydant (102) n'est pas en communication avec l'entrée de combustible (105) ; une chambre de diffusion/tampon (401), fournissant un espace pour la diffusion de l'oxydant après que l'oxydant s'écoule hors du canal d'entrée d'oxydant (101), la chambre de diffusion/tampon (401) étant connectée à des composants de distribution d'oxydant (302, 303, 304) ; dans lequel de multiples trous traversants (305) sont prévus dans une paroi du canal d'entrée d'oxydant (101) qui est adjacente à la chambre de diffusion/tampon (401) ; dans lequel les composants de distribution d'oxydant (302, 303, 304) comprennent un composant de distribution de combustible et d'oxydant primaire (302), un composant de distribution d'oxydant secondaire (303) et un composant de distribution d'oxydant tertiaire (304) ; le composant de distribution d'oxydant secondaire (303) et le composant de distribution d'oxydant tertiaire (304) sont agencés du même côté que le composant de distribution de combustible et d'oxydant primaire (302), et le composant de distribution d'oxydant secondaire (303) est situé entre le composant de distribution d'oxydant tertiaire (304) et le composant de distribution de combustible et d'oxydant primaire (302).

2. Composant de distribution de gaz selon la revendication 1, dans lequel le rapport de (a) une section transversale d'écoulement efficace totale pour l'oxydant depuis la chambre de diffusion/tampon (401) vers les composants de distribution d'oxydant (302, 303, 304) à (b) un volume total de la chambre de diffusion/tampon (401) est défini comme un coefficient de rapport de tamponnage, qui est dans la plage de 10 % à 40 % m²/m³.

3. Composant de distribution de gaz selon la revendication 2, dans lequel le coefficient de rapport de tamponnage est dans la plage de 15 % à 35 % m²/m³, de préférence dans la plage de 20 % à 30 % m²/m³.

4. Composant de distribution de gaz selon l'une quelconque des revendications précédentes, dans lequel une chicane (501) est prévue à une jonction de la chambre de diffusion/tampon (401) et de chaque composant de distribution d'oxydant (302, 303, 304), la chicane (501) bloquant partiellement une entrée d'oxydant dans le composant de distribution d'oxydant (302, 303, 304).

5. Composant de distribution de gaz selon l'une quelconque des revendications précédentes, dans lequel les diamètres des multiples trous traversants (305) sont distribués de manière non uniforme.

6. Composant de distribution de gaz selon la revendication 5, dans lequel les multiples trous traversants (305) sont configurés de telle sorte que les trous traversants du milieu (305) ont un plus petit diamètre tandis que les trous traversants périphériques (305) ont un plus grand diamètre.

7. Composant de distribution de gaz selon l'une quelconque des revendications précédentes, dans lequel la chambre de diffusion/tampon (401) a une paroi extérieure (103) connectée de manière amovible.

8. Brûleur à plusieurs étages comprenant un composant de distribution de gaz selon l'une quelconque des revendications précédentes.

9. Brûleur à plusieurs étages selon la revendication 8, dans lequel le composant de distribution de combustible et d'oxydant primaire (302) est pourvu : d'au moins un canal d'alimentation en combustible pour que le combustible s'écoule depuis le canal d'entrée de combustible (104), une extrémité de l'au moins un canal d'alimentation en combustible étant pourvue d'une buse de combustible ; et d'au moins un canal d'alimentation en oxydant primaire pour que l'oxydant primaire s'écoule, le canal d'alimentation en oxydant primaire étant construit pour entourer une paroi extérieure du canal d'alimentation en combustible, et une extrémité du canal d'alimentation en oxydant primaire étant pourvue d'une buse annulaire entourant la buse de combustible ; le composant de distribution d'oxydant secondaire (303) étant pourvu d'au moins un canal d'alimentation en oxydant secondaire pour que l'oxydant secondaire s'écoule, une extrémité de l'au moins un canal d'alimentation en oxydant secondaire étant pourvue d'une buse d'oxydant secondaire ; le composant de distribution d'oxydant tertiaire (304) étant pourvu d'au moins un canal d'alimentation en oxydant tertiaire pour que l'oxydant tertiaire s'écoule, une extrémité de l'au moins un canal d'alimentation en oxydant tertiaire étant pourvue d'une buse d'oxydant tertiaire.

10. Utilisation du brûleur à plusieurs étages selon la revendication 8 ou 9 pour la combustion du combustible avec l'oxydant.

11. Utilisation selon la revendication 10, dans laquelle l'oxydant total est divisé en oxydant primaire et en oxydant secondaire et/ou tertiaire, l'oxydant primaire représentant plus de 0 % et moins de 20 %, de préférence moins de 10 %, plus préférablement 2 % - 5 % de l'oxydant total.

12. Utilisation selon la revendication 10 ou 11, dans laquelle l'oxydant est de l'oxygène.

13. Utilisation selon l'une quelconque des revendications 10 à 12 dans une opération de fusion dans un four.
